# EUROPÄISCHE PATENTSCHRIFT

(11) **EP 1 629 026 B1**
(45) Veröffentlichungstag und Bekanntmachung des Hinweises auf die Patenterteilung: **06.09.2006**
(21) Anmeldenummer: 04731892.8
(22) Anmeldetag: 10.05.2004
(51) Int. Cl.: C08G 65/12

(54) **VERBESSERTES VERFAHREN ZUR ANIONISCHEN POLYMERISATION VON OXIRANEN**
IMPROVED METHOD FOR THE ANIONIC POLYMERISATION OF OXIRANES
PROCEDE AMELIORE DE POLYMERISATION ANIONIQUE D'OXIRANNES

(30) Priorität: 20.05.2003 DE 10323047
(43) Veröffentlichungstag der Anmeldung: 01.03.2006
(73) Patentinhaber: BASF Aktiengesellschaft, 67056 Ludwigshafen (DE)
(72) Erfinder: DESBOIS, Philippe, 67487 Maikammer (DE); DEFFIEUX, Alain, F-33000 Bordeaux (FR); CARLOTTI, Stéphane, F-33400 Talence (FR); BILLOUIARD, Cyrille, F-33400 Talence (FR)
(86) Internationale Anmeldenummer: PCT/EP2004/004956
(87) Internationale Veröffentlichungsnummer: WO 2004/104068

(56) Entgegenhaltungen:
- WO-A-03/091296
- WO-A-20/04041909
- DE-A- 1 495 451
- PATENT ABSTRACTS OF JAPAN Bd. 2003, Nr. 02, 5. Februar 2003 (2003-02-05) & JP 2002 293915 A (ASAHI DENKA KOGYO KK), 9. Oktober 2002 (2002-10-09)
- PATENT ABSTRACTS OF JAPAN Bd. 2000, Nr. 06, 22. September 2000 (2000-09-22) & JP 2000 086755 A (JAPAN CHEMICAL INNOVATION INSTITUTE), 28. März 2000 (2000-03-28)

## Beschreibung

Die Erfindung betrifft ein Verfahren zur Herstellung von Homopolymeren aus Oxiranen, oder von Copolymeren aus Oxiranen und Comonomeren, durch anionische Polymerisation in Gegenwart einer ausgewählten Alkalimetallverbindung und eines Aluminiumorganyls, dadurch gekennzeichnet, dass bei der Polymerisation keine Kronenether und keine Kryptanden, mitverwendet werden.

Weiterhin betrifft die Erfindung die nach dem Verfahren erhältlichen Homopolymere aus Oxiranen, und Copolymere (auch Blockcopolymere) aus Oxiranen und Comonomeren, die Verwendung der Homopolymere oder Copolymere zur Herstellung von Formkörpern, Folien, Fasern und Schäumen, sowie schließlich die Formkörper, Folien, Fasern und Schäume aus den Homopolymeren oder Copolymeren.

Unter Oxiranen sollen Epoxide einfacher Struktur verstanden werden, beispielsweise Ethylenoxid (EO), auch als Oxiran bezeichnet, und Propylenoxid (PO) auch als Methyloxiran bezeichnet. Siehe auch CD Römpp Chemie Lexikon, Version 1.0, Thieme Verlag Stuttgart, 1995 (nachfolgend als Römpp zitiert), Stichwort "Oxirane". Als OxiranPolymere sind insbesondere Polyethylenoxid (PEO) und Polypropolylenoxid (PPO) zu nennen.

PO- und EO-Polymere können u.a. auch durch anionische Polymerisation hergestellt werden. Dazu geeignete Initiatorsysteme enthalten beispielsweise Aluminiumporphyrine als Initiator und voluminöse Lewis-Säuren wie Isobutylaluminium-bis(2,6-di-tert-butyl-4-methylphenolat) (= iBu-Al-(BHT)₂, BHT = Butylhydroxytoluol) als Coinitiator. Jedoch sind die erhaltenen Polymere aufgrund geringer Molekulargewichte, ausgeprägter Eigenfarbe und des teuren Initiatorsystems nicht marktfähig.

Homopolymerisationen von PO mit alternativen Initiatorsystemen werden in folgenden Schriften beschrieben:

Ding et al. lehren in Eur. Pol. J. 1991, 27, 891-894 und Eur. Pol. J, 1991, 27, 895-899, dass die anionische Polymerisation von PO mittels 1-Methoxy-2-propanol-Kaliumsalz, durch Mitverwendung eines Kronenethers wie 18-Krone-6 erheblich (z.B. um das 15-fache) beschleunigt wird. Die erhaltenen PO-Homopolymere hatten zahlenmittlere Molekulargewichte von ca. 3000 bis 13000.

Die JP-A 2000/086755 offenbart eine Initiatorzusammensetzung aus einem Alkalimetallalkoxid (z.B. Kalium-tert-butanolat) oder einem Alkalimetallhydroxid, einer organischen Lewis-Säure, z.B. CH₃-Al-(BHT)₂, und einem Kronenether, z.B. 18-Krone-6. Bei 48 Stunden Reaktionszeit betragen die zahlenmittleren Molekulargewichte (Mn) des PPO maximal etwa 8000.

Die JP-A 2000/256457 lehrt eine ähnliche Initiatorzusammensetzung aus einem Alkalimetallalkoxid bzw. -hydroxid, einem Kronenether, und speziellen organischen Lewis-Säuren, die direkte Metall-Kohlenstoff-Bindungen ohne Sauerstoffbrücken aufweisen. Die zahlenmittleren Molekulargewichte des PPO liegen nach 5 bis 25 Stunden Reaktionszeit bei maximal etwa 10000.

In der JP-A 2002/128886 wird eine ähnliche Initiatorzusammensetzung aus einem Alkalimetallalkoxid oder -hydroxid, einem Kronenether, einer Trialkylaluminiumverbindung und einem Polyetherpolyol offenbart. Nach 3 bzw. 6 Tagen Polymerisationszeit betragen die zahlenmittleren Molekulargewichte des PPO ca. 25000 bzw. ca. 18000.

Alle drei JP-Schritten lehren, dass der Kronenether ein wesentlicher Bestandteil des Initiatorsystems ist, da er das Alkalimetall umhüllt, und dass pro 1 mol Alkalimetall mindestens 1 mol Kronenether einzusetzen ist. In sämtlichen Beispielen der Schriften wird ein Kronenether verwendet.

Verwendet man neben dem Oxiran ein weiteres, anionisch polymerisierbares Monomer wie z.B. Styrol, so lassen sich auch Oxiran-Copolymere herstellen, insbesondere Blockcopolymere. Quirk et al. beschreiben in Macromol. Chem. Phys. 2000, 201, 1395-1404 auf S. 1396-1397 die Herstellung von Polystyrol-PO-Blockcopolymeren, wobei zunächst Styrol mittels sec-Butyllithium anionisch polymerisiert wird. Der Polystyrolblock wird danach mit EO funktionalisiert, und schließlich aus PO in Gegenwart von Kalium-tert-amylat und Dimethylsulfoxid (DMSO) ein PPO-Block anpolymerisiert. Die Reaktionszeit beträgt 7 Tage und das zahlenmittlere Molekulargewicht des Blockcopolymeren etwa 5000.

Quirk et al. lehren in Polym. Int. 1996, 39, 3-10 die Herstellung von Polystyrol-EO-Blockcopolymeren nach einem ähnlichen Verfahren, wobei als Kaliumsalz Kalium-tert-butanolat, K-tert-amylat oder Kalium-di-tert-2,6-phenolat verwendet werden. Nach 1 bis 6 Tagen Reaktionszeit wurden Bolckcopolymere mit zahlenmittleren Molekulargewichten von maximal 19000 erhalten.

Die beschriebenen Verfahren zur Herstellung von Homo- oder Copolymeren des PO bzw. EO weisen entweder sehr lange Polymerisationszeiten auf (mehrere Tage), und/oder die erhaltenen Molekulargewichte sind unbefriedigend gering. Aus diesen Gründen sind sie unwirtschaftlich.

Ihara et al. lehren in Macromolecules 2002, 35 Nr. 11 vom 21.05.2002, dass sich zwar tert-Butylacrylat in Gegenwart eines Initiatorsystems aus Kalium-tert-butylat und Trialkylaluminiumverbindungen wie Triisobutylaluminium (TIBA), anionisch zum Homopolymer polymerisieren lässt, nicht jedoch n-Butylacrylat und Methylmethacrylat (MMA). Allerdings kann an einen Poly-tert-butylacrylat-Block ein Poly-MMA-Block anpolymerisiert werden. Oxirane als Monomere werden nicht erwähnt.

Es bestand die Aufgabe, den geschilderten Nachteilen abzuhelfen. Insbesondere bestand die Aufgabe, ein alternatives Verfahren zur Polymerisation von Oxiranen bereitzustellen. Das Verfahren sollte gegenüber den bekannten Verfahren ökonomische Vorteile bieten.

Die Polymerisationszeiten sollten deutlich kürzer sein als bei den Verfahren des Standes der Technik, wobei eine maximale Polymerisationszeit von 48 Stunden angestrebt wurde. Dabei sollte die kürzere Dauer nicht zu Lasten des erzielten Molekulargewichts gehen.

Weiterhin sollten sich mit dem Verfahren Polyoxirane mit höheren Molekulargewichten, verglichen mit dem Stand der Technik, erzielen lassen.

Außerdem bestand die Aufgabe, ein Verfahren bereitzustellen, mit dem sich sowohl Homopolymere als auch Copolymere herstellen lassen. Oxirane sind sehr reaktive Verbindungen, und das Verfahren sollte eine verbesserte Kontrolle und einfachere Steuerung der Oxiranpolymerisation ermöglichen.

Schließlich sollte das Verfahren einfacher sein als die Verfahren des Standes der Technik, insbesondere mit weniger Reagenzien auskommen.

Demgemäß wurde das eingangs definierte Verfahren gefunden, sowie die genannten Homo- und Copolymere, ihre genannte Verwendung, sowie die genannten Formkörper, Folien, Fasern und Schäume. Bevorzugte Ausführungsformen der Erfindung sind den Unteransprüchen zu entnehmen.

Bei dem erfindungsgemäßen Verfahren werden durch anionische Polymerisation Oxirane zu Homopolymeren, oder Oxirane und Comonomere zu Copolymeren, polymerisiert. Die Polymerisation erfolgt in Gegenwart einer ausgewählten Alimetallverbindung gemäss Anspruch 1 und eines Aluminiumorganyls.

Als Oxirane sind alle Epoxide einfacher Struktur (d.h. ohne kondensierte Ringsysteme) geeignet. Bevorzugt sind die Oxirane ausgewählt aus Propylenoxid (PO), Ethylenoxid (EO) oder deren Mischungen.

Verwendet man mehrere Oxirane gemeinsam, beispielsweise PO und EO, so erhält man PO-EO-Copolymere. Es wurde gefunden, dass PO/EO-Gemische in ähnlicher Weise polymerisieren wie reines PO. Aufgrund dieses ähnlichen Polymerisationsverhaltens kann man einen Teil des PO durch EO ersetzen, ohne die Polymerisationsbedingungen (Verfahrensparameter) wesentlich ändern zu müssen. Dies bringt wirtschaftliche Vorteile, da aufwändige Verfahrensanpassungen entfallen. Außerdem ist EO in der Regel preiswerter als PO.

Geeignete Gemische von PO und EO weisen üblicherweise einen EO-Anteil von 0,1 bis 99,9, insbesondere 10 bis 90 und besonders bevorzugt 20 bis 80 Gew.-% auf, bezogen auf das Gemisch.

Zur Herstellung der Copolymere kommen als Comonomere alle anionisch polymerisierbaren Monomere in Betracht, insbesondere Styrolmonomere und Dienmonomere. Als Styrolmonomere sind alle vinylaromatischen Monomere geeignet, beispielsweise Styrol, *α*-Methylstyrol, p-Methylstyrol, Ethylstyrol, tert.-Butylstyrol, Vinylstyrol, Vinyltoluol, 1,2-Diphenylethylen, 1,1-Diphenylethylen oder deren Mischungen. Als Dienmonomere kommen alle polymerisierbaren Diene in Betracht, insbesondere 1,3-Butadien (kurz: Butadien), 1,3-Pentadien, 1,3-Hexadien, 2,3-Dimethylbutadien, Isopren, Piperylen oder Mischungen davon.

Bevorzugt sind die Comonomere ausgewählt aus Styrol, α-Methylstyrol, Butadien, Isopren oder deren Mischungen. Besonders bevorzugt ist Styrol.

Sofern Comonomere mitverwendet werden, d.h. sofern Copolymere hergestellt werden, beträgt der Anteil der Comonomeren 0,1 bis 99,9, bevorzugt 0,1 bis 80 und insbesondere 0,1 bis 50 Gew.-%, bezogen auf die Gesamtmonomerenmenge. Weitere Angaben zu den Copolymeren, insbesondere Blockcopolymeren, werden weiter unten gemacht.

Bei der ausgewählten Alkalimetall verbindung handelt es sich um Alkoholate, Hydride, Hydroxide, Amide, Arylene, Arylalkyle und Alkyle der Alkalimetalle; wobei als Alkalimetall beispielsweise Lithium, Natrium oder Kalium geeignet sind.

In Betracht kommende Alkalimetallhydride sind insbesondere Lithiumhydrid, Natriumhydrid oder Kaliumhydrid.

Als Organyle werden die metallorganischen Verbindungen eines Metalls mit mindestens einer Metall-Kohlenstoff σ-Bindung verstanden, insbesondere die Alkyl- oder Arylverbindungen. Daneben können die Metallorganyle noch Wasserstoff, Halogen oder über Heteroatome gebundene organische Reste, wie Alkoholate oder Phenolate, am Metall enthalten. Letztere sind beispielsweise durch ganze oder teilweise Hydrolyse, Alkoholyse oder Aminolyse erhältlich.

Geeignete Alkalimetallalkoholate sind solche von Alkoholen mit 1 bis 10 C-Atomen, beispielsweise die Methanolate, Ethanolate, n- und iso-Propanolate, n-, sec- und tert-Butanolate, sowie die Pentanolate. Der Alkoholatrest kann substituiert sein, z.B. mit C₁₋C₅-Alkyl oder Halogen. Bevorzugte Alkoholate sind die tert-Amylate (= 2-Methyl-2-butanolate). Besonders bevorzugt verwendet man Kalium-tert-amylat, Natrium-tert-amylat und Natrium-iso-propanolat.

Als Alkalimetallhydroxide kommen beispielsweise Lithiumhydroxid, Natriumhydroxid oder Kaliumhydroxid in Betracht, insbesondere Kaliumhydroxid.

Geeignete Alkalimetallamide sind z.B. die Verbindungen M-NH₂. Als Alkalimetallcarboxylate R-COOM können solche von Carbonsäuren mit 1 bis 10 C-Atomen verwendet werden. In beiden Fällen ist M = Li, Na, K.

Geeignete Alkalimetallaryle sind beispielsweise Phenyllithium und Phenylkalium, sowie die multifunktionelle Verbindung 1,4-Dilithiobenzol. Als Alkalimetallarylalkyle sind insbesondere Alkalimetallverbindungen vinylsubstituierter Aromaten geeignet, insbesondere Styrylkalium und Siyrylnatrium M-CH=CH-C₆H₅ mit M = K oder Na. Sie sind beispielsweise durch Umsetzung des entsprechenden Alkalimetallhydrids mit Styrol und Gegenwart einer Aluminiumverbindung wie TIBA, erhältlich. Ebenso sind oligomere bzw. polymere Verbindungen wie Polystyryl-lithium oder -natrium geeignet, das z.B. durch Vermischen von sec-Butyllithium und Styrol, und anschließende Zugabe von TIBA, erhältlich ist. Weiterhin kann man auch Diphenylhexyl-lithium oder -kalium verwenden.

Geeignete Alkalimetallalkyle sind solche von Alkanen, Alkenen und Alkinen mit 1 bis 10 C-Atomen, beispielsweise Ethyl-, Propyl-, Isopropyl-, n-Butyl-, sec-Butyl-, tert-Butyl-, Hexamethylendi-, Butadienyl-, Isoprenyl-, oder die multifunktionellen Verbindungen 1,4-Dilithiobutan oder 1,4-Dilithio-2-buten. Die Alkalimetallalkyle sind insbesondere zur Herstellung der Oxiran-Copolymere gut geeignet: bei der Herstellung der, aus Polyoxiranblöcken und Blöcken des Comonomers, aufgebauten Blockcopolymere können sie vorteilhaft bei der Polymerisation des Comonomerblocks verwendet werden. So kann man z.B. zur Polymerisation des Polystyrolblocks bevorzugt sec-Butyllithium einsetzen.

Wird die Polymerisation als Lösungspolymerisation durchgeführt, richtet sich die Wahl der Alkalimetallverbindung auch nach dem verwendeten Lösungsmittel. Bevorzugt wählt man Alkalimetallverbindung und Lösungsmittel derart, dass sich die Alkalimetallverbindung zumindest teilweise im Lösungsmittel löst.

Aus dem Vorstehenden ergibt sich, dass in einer bevorzugten Ausführungsform die Alkalimetallverbindung ausgewählt ist aus Alkoholaten, Hydriden, Hydroxiden, Amiden, Carboxylen, Arylen, Arylalkylen und Alkylen der Alkalimetalle, oder deren Mischungen. Es versteht sich, dass auch verschiedene Alkalimetallverbindungen verwendet werden können.

Die Herstellung der Alkalimetallverbindungen ist bekannt bzw. die Verbindungen sind im Handel erhältlich.

Bezüglich der Aluminiumorganyle besteht die Vorstellung, dass sie als Aktivator wirken. Vermutlich aktivieren sie sowohl die Alkalimetallverbindung, als auch das Oxiran. Es besteht die Vorstellung, dass das Aluminiumorganyl durch Komplexbildung die Löslichkeit der Alkalimetallverbindung verbessert. Bei dem Oxiran tritt das Aluminiumorganyl möglicherweise in Wechselwirkung mit dessen Epoxidgruppe, öffnet den Epoxidring und ermöglicht auf diese Weise die Polymerisation des Oxirans. Der Mechanismus unterscheidet sich vermutlich grundlegend von dem der anionischen Polymerisation von Styrol oder Butadien, bei der das Aluminiumorganyl als sog. "Retarder" die Polymerisationsgeschwindigkeit verringert.

Als Aluminiumorganyle können insbesondere solche der Formel R₃-Al verwendet werden, wobei die Reste R unabhängig voneinander Wasserstoff, Halogen, C₁₋₂₀-Alkyl, C₆₋₂₀-Aryl oder C₇₋₂₀-Arylalkyl bedeuten. Bevorzugt werden als Aluminiumorganyl, Aluminiumtrialkyle verwendet.

Die Alkylreste können gleich sein, z.B. Trimethylaluminium (TMA), Triethylaluminium (TEA), Tri-iso-butylaluminium (TIBA), Tri-n-butylaluminium, Tri-iso-propylaluminium, Tri-n-hexylaluminium, oder verschieden, z.B. Ethyl-di-iso-butyl-aluminium.

Ebenso kann man Aluminiumdialkyle wie Di-isobutylaluminiumhydrid (DiBAH) verwenden.

Als Aluminiumorganyle können auch solche verwendet werden, die durch teilweise oder vollständige Umsetzung von Alkyl-, Arylalkyl- oder Arylaluminiumverbindungen mit Wasser (Hydrolyse), Alkoholen (Alkoholyse), Aminen (Aminolyse) oder Sauerstoff (Oxidation) gebildet werden, oder die Alkoholat-, Thiolat-, Amid-, Imid- oder Phosphit-Gruppen tragen.

Durch Hydrolyse werden Aluminoxane erhalten. Geegnete Aluminoxane sind z.B. Methylaluminoxan, isobutyliertes Methylaluminoxan, Isobutylaluminoxan und Tetraisobutyldialuminoxan.

Alkoholyse ergibt Aluminiumalkoholate, auch als Aluminiumalkoxide bezeichnet (z.B. ...propanolat = ...propoxid). Geeignete Alkoholate sind beispielsweise Dimethyl-aluminium-ethanolat, Diethyl-aluminium-ethanolat, Dimethyl-aluminium-iso-propanolat, Dimethyl-aluminium-n-butanolat, Diisobutyl-aluminium-ethanolat, Di-iso-butyl-aluminium-iso-propanolat, Di-iso-butyl-aluminium-n-butanolat. Geeignete Alkoholate sind außerdem solche des 2,6-Di-tert.-butyl-4-methylphenols, auch als Butylhydroxytoluol (BHT) bezeichnet, beispielsweise Methyl-aluminium-bis(2,6-di-tert-butyl-4-methylphenolat) (= Me-Al-(BHT)₂), Isobutyl-aluminium-bis(2,6-di-tert-butyl-4-methylphenolat) (= iBu-Al-(BHT)₂), und Diisobutyl-aluminium-(2,6-di-tert.-butyl-4-methyl-phenolat (= (iBu)₂-Al-BHT, CAS-Nr. 56252-56-3).

Ein geeignetes Aluminiumamid ist z.B. Diethylaluminium-(N,N-dibutylamid). Oxidation ergibt Aluminiumoxide wie etwa Bis(diisobutyl)aluminiumoxid.

In Abhängigkeit vom molaren Verhältnis von Aluminiumalkyl R₃-Al zum Alkohol R'OH werden bei der Alkoholyse eine, zwei oder alle drei Alkylgruppen des Aluminiumalkyls durch eine Alkoholatgruppe (Alkoxidgruppe) ersetzt. Es können auch Gemische verschiedener Alkoholate R₂-Al-OR', R-Al-(OR')₂ und Al-(OR')₃ entstehen. Gleiches gilt sinngemäß für Aluminiumaryle bzw. -arylalkyle, und für andere Reaktionspartner als Alkohol. So entstehen z.B. bei Umsetzung zweier verschiedener Aluminiumalkyle R₃-Al und R'₃-Al sowohl Verbindungen R₂-Al-R' als auch R-Al-R'₂.

Durch Umsetzung von Aluminiumalkylen mit mehrwertigen Alkoholen, beispielsweise Dialkoholen sind Alkoholate mit mehreren Al-Atomen erhältlich. So erhält man durch Umsetzung von TIBA mit 1,4-Butandiol (HO-nBu-OH) ein Aluminiumalkoholat iBu-Al-O-nBu-O-Al-iBu, das bevorzugt verwendet werden kann.

Es bedeuten Me Methyl, nBu n-Butyl, iBu iso-Butyl.

In einer bevorzugten Ausführungsform werden als Aluminiumorganyl Aluminiumtrialkyle verwendet. In dieser Ausführungsform können die Aluminiumtrialkyle als einzige Aluminiumverbindung, oder zusammen mit Aluminoxanen, Alkoholaten, Amiden und/oder Oxiden des Aluminiums, verwendet werden. Jedenfalls werden in dieser Ausführungsform keine Aluminoxane, Alkoholate, Amide und/oder Oxide des Aluminiums alleine, d.h. ohne Aluminiumtrialkyle, verwendet.

In einer besonders bevorzugten Ausführungsform verwendet man zur Herstellung der Homopolymere TEA alleine, oder insbesondere TIBA alleine, und zur Herstellung der Blockcopolymere TIBA alleine, oder Ethyl-di-iso-butyl-aluminium alleine.

In einer anderen, ebenfalls besonders bevorzugten Ausführungsform wird zusätzlich zum Aluminiumtrialkyl ein Aluminiumalkoholat mitverwendet, beispielsweise TIBA oder TEA und ein Alkoholat ausgewählt aus Dimethyl-aluminium-iso-propanolat, Dimethyl-aluminium-n-butanolat, Di-iso-butyl-aluminium-iso-propanolat, Di-iso-butyl-aluminium-n-butanolat, oder iBu₂-Al-O-nBu-O-Al-iBu₂.

Aus dem Gesagten ergibt sich, dass auch Mischungen verschiedener Alkalimetallverbindungen bzw. Aluminiumorganyle verwendet werden können. Zu den Mengen an Alkalimetallverbindung und Aluminiumorganyl ist Folgendes zu sagen:

Die benötigte Menge an Alkalimetallverbindung richtet sich u.a. nach dem gewünschten Molekulargewicht (Molmasse) des Polymeren, das hergestellt werden soll, nach Art und Menge des verwendeten Aluminiumorganyl und nach der Polymerisationstemperatur. In der Regel verwendet man 0,0001 bis 10, bevorzugt 0,0001 bis 5 und besonders bevorzugt 0,0001 bis 2 Mol-% Alkalimetallverbindung, bezogen auf die Gesamtmenge der eingesetzten Monomeren.

Wie erwähnt dient das Aluminiumorganyl vermutlich als Aktivator der Alkalimetallverbindung und des Oxirans. Daher richtet sich die erforderliche Menge an Aluminiumorganyl u.a. nach Art und Menge des verwendeten Monomeren, dem gewünschten Molekulargewicht (Molmasse) des Polymeren, nach Art und Menge der verwendeten Alkalimetallverbindung und nach der Polymerisationstemperatur.

Das molare Verhältnis von Aluminiumorganyl zu Alkalimetallverbindung kann in weiten Grenzen variieren. Es richtet sich z.B. nach Polymerisationsgeschwindigkeit, der Polymerisationstemperatur, der Art und Menge (Konzentration) der eingesetzten Monomeren, und dem gewünschten Molekulargewicht des Polymeren. Bevorzugt wählt man die Mengen an Aluminiumorganyl und Alkalimetallverbindung derart, dass in der Reaktionsmischung pro ein Mol Alkalimetall 1 bis 100 mol Aluminium vorliegen, d.h. bevorzugt beträgt das Molverhältnis von Aluminium zu Alkalimetall 1:1 bis 100:1. Besonders bevorzugt liegt das Molverhältnis Aluminium zu Alkalimetall bei 2:1 bis 50:1, insbesondere 4:1 bis 10:1. Beispielsweise kann man bei einem Verhältnis von etwa 5:1 arbeiten.

In einer bevorzugten Ausführungsform wählt man die Menge an Aluminiumorganyl derart, dass bezogen auf die Stoffmenge des Oxiran-Monomers, 0,5 bis 20 mol-% Aluminiumorganyl, gerechnet als Aluminiumatome, vorliegen. D.h. bevorzugt werden 0,5 bis 20 mol-% Aluminiumorganyl, gerechnet als Aluminiumatome und bezogen auf die Stoffmenge des Oxirans, verwendet. Besonders bevorzugt setzt man 1 bis 5 mol-% Aluminiumorganyl ein.

Die Zugabe von Alkalimetallverbindung und Aluminiumorganyl kann sowohl zeitlich als auch räumlich betrachtet gemeinsam oder getrennt voneinander, diskontinuierlich auf einmal oder in mehreren Portionen, oder auch kontinuierlich, erfolgen. Insbesondere bei Verwendung von Alkalimetallhydriden als Alkalimetallverbindung kann man Aluminiumorganyl und Alkalimetallhydrid vorab vermischen und diese Mischung zugeben, da das Aluminiumorganyl die Löslichkeit des Alkalimetallhydrids verbessert. Verwendet man mehrere Alkalimetallverbindungen bzw. mehrere Aluminiumorganyle, so kann man sie zeitlich und/oder räumlich gemeinsam oder getrennt voneinander zufügen.

Man kann Alkalimetallverbindung und Aluminiumorganyl als solche zugeben, oder - bevorzugt - gelöst bzw. dispergiert (emulgiert oder suspendiert) in einem Lösungsmittel bzw. Dispersionsmittel. Dabei kann - muss jedoch nicht - dieses Lösungs- bzw. Dispersionsmittel identisch sein mit dem bei der Polymerisation verwendeten Lösungsmittel, siehe unten.

Bei der Polymerisation können Aminverbindungen mitverwendet werden, die das Alkalimetallatom durch Chelatbildung komplexieren. In Betracht kommen insbesondere tertiäre Aminverbindungen wie N,N,N',N'-Tetramethylmethylendiamin (TMMDA), N,N,N',N'-Tetramethylethylendiamin (TMEDA), N,N,N',N'-Tetramethylpropylendiamin (TMPDA), N,N,N',N'-Tetramethylhexendiamin (TMHDA) und andere N,N,N',N'-Tetraalkyldiamine, sowie Diazabicylco[2,2,2]octan (DABCO). Außerdem sind auch Amine wie Pentamethyldiethylentriamin geeignet.

Erfindungsgemäß werden bei der Polymerisation keine Kronenether und keine Kryptanden. Unter Kronenethern sind makrocyclische Polyether zu verstehen. Sie sind in der Regel planar gebaut, und ihre Sauerstoffatome sind beispielsweise durch Ethylenbrücken verbunden. Zu Kronenethern zählen auch solche, deren Sauerstoffatome ganz oder teilweise durch Heteroatome wie N, P oder S ersetzt sind, und Spheranden, d.h. isocyclische Kohlenstoff-Ringe, die -OH oder andere polare Gruppen tragen, welche alle gleichgerichtet in das Innere eines Hohlraumes zeigen. Unter Kryptanden werden makropolycyclische, mit den Kronenethern verwandte Azapolyether verstanden, in denen zwei Brückenkopf-Stickstoffatome durch ein oder mehrere Sauerstoffatome enthaltende Brücken verbunden sind. Näheres siehe Römpp, Stichworte "Kronenether" und "Kryptanden".

Insbesondere werden Kronenether bzw. Kryptanden weder als Reagenz noch als Begleitstoff (z.B. Lösungsmittel) verwendet.

Durch den Verzicht auf diese (teuren) Verbindungen ist das erfindungsgemäße Verfahren nicht nur einfacher als die Verfahren des Standes der Technik, sondern auch wirtschaftlicher zu betreiben.

Die Polymerisation kann in Abwesenheit oder - bevorzugt - in Gegenwart eines Lösungsmittels durchgeführt werden. Bevorzugt ist das verwendete Lösungsmittel unpolar und enthält keine Sauerstoffatome oder andere die Polarität erhöhende Heteroatome. Die Polymerisation erfolgt besonders bevorzugt in einem aliphatischen, isocyclischen oder aromatischen Kohlenwasserstoff oder Kohlenwasserstoffgemisch, wie Benzol, Toluol, Ethylbenzol, Xylol, Cumol, Hexan, Heptan, Octan oder Cyclohexan. Bevorzugt werden Lösungsmittel mit einem Siedepunkt oberhalb 70°C verwendet. Besonders bevorzugt wird Heptan, Toluol oder Cyclohexan verwendet.

Nach Beendigung der Polymerisation, d.h. nach Verbrauch der Monomeren, wird die Polymerisation abgebrochen. Während und auch nach Beendigung der Polymerisation, d.h. auch nachdem die Monomere verbraucht sind, liegen in der Reaktionsmischung "lebende" Polymerketten vor. Lebend bedeutet, dass bei erneuter Monomerzugabe die Polymerisationsreaktion sofort wieder anspringen würde, ohne dass erneut Polymerisationsinitiator zugegeben werden müsste. Durch Zugabe eines Kettenabbruchmittels (kurz: Abbruchmittels), wird die Reaktion schließlich abgebrochen. Dabei terminiert das Abbruchmittel die lebenden Polymerkettenenden irreversibel.

Als Abbruchmittel kommen alle protonenaktiven Substanzen, und Lewis-Säuren, in Betracht. Geeignet sind beispielsweise Wasser, sowie C₁-C₁₀-Alkohole wie Methanol, Ethanol, Isopropanol, n-Propanol und die Butanole. Ebenfalls geeignet sind aliphatische und aromatische Carbonsäuren wie 2-Ethylhexansäure, sowie Phenole. Auch anorganische Säuren wie Kohlensäure (Lösung von CO₂ in Wasser) und Borsäure können verwendet werden. Bevorzugt wird als Abbruchmittel Ethanol verwendet.

Die erhaltene Reaktionsmischung kann danach, falls gewünscht, in an sich bekannter Weise auf das Polymere aufgearbeitet werden, z.B. mittels Entgasung in einem Entgasungsextruder oder Verdampfer. Durch die Entgasung werden Restmonomere und gebildete Oligomere, sowie bei der Polymerisation verwendete flüchtige Hilfs- und Begleitstoffe sowie insbesondere das Lösungsmittel, abgetrennt.

Die Reaktionsbedingungen wie Druck und Temperatur richten sich u.a. nach der Reaktivität und Konzentration der Monomere, den verwendeten Alkalimetall- und Aluminiumverbindungen und ihren Konzentrationen. Üblicherweise arbeitet man bei 0,1 bis 10, insbesondere 0,5 bis 5 bar Absolutdruck, besonders bevorzugt bei Normaldruck , und bei -50 bis 200, insbesondere -30 bis 100 und besonders bevorzugt -10 bis 30°C Reaktionstemperatur. Tiefe Temperaturen ermöglich eine bessere Kontrolle der Reaktion, jedoch ist die Polymerisationszeit länger. Die Polymerisationsdauer beträgt üblicherweise 5 min bis 48 Stunden, insbesondere 10 min bis 12 Stunden.

Das erfindungsgemäße Verfahren zur Herstellung der Polymere kann diskontinuierlich oder kontinuierlich, in jedem üblichen Behälter bzw. Reaktor durchgeführt werden, wobei es grundsätzlich möglich ist, rückvermischende oder nicht rückvermischende Reaktoren (d.h. Reaktoren mit Rührkessel- oder Rohrreaktor-Verhalten) zu verwenden. Das Verfahren führt je nach Wahl der Alkalimetallverbindung und des Aluminiumorganyls, deren Konzentrationen, des speziell angewandten Verfahrensablaufs (z.B. Zugabereihenfolge) und anderer Parameter, wie Polymerisationsdauer und -temperatur und evtl. Temperaturverlauf, zu Polymerisaten unterschiedlichen Molekulargewichts. Geeignet sind zum Beispiel Rührkessel, Turmreaktoren, Schlaufenreaktoren sowie Rohrreaktoren oder Rohrbündelreaktoren mit oder ohne Einbauten. Einbauten können statische oder bewegliche Einbauten sein.

Neben dem vorstehend beschriebenen Verfahren zur Polymerisation betrifft die Erfindung ebenso die nach dem Polymerisationsverfahren erhältlichen Polymere, d.h. Homopolymere aus Oxiranen, oder Copolymere aus Oxiranen und Comonomeren, oder deren Mischungen.

Solche Oxiran-Homopolymere sind insbesondere Polyethylenoxid und Polypropylenoxid. Das zahlenmittlere Molekulargewicht Mn des erhaltenen Polyethylenoxids (PEO) bzw. Polypropylenoxids (PPO) beträgt jeweils bevorzugt 5000 bis 1.000.000, insbesondere 10.000 bis 500.000 und besonders bevorzugt 20.000 bis 200.000 g/mol.

Die erhaltenen Copolymere können statistisch aufgebaut sein, d.h. die Abfolge der Monomereinheiten im Copolymer ist rein statistisch, oder alternierend (abwechselnd Oxiran- und Comonomereinheiten). Sie können ebenso eine tapered-Struktur aufweisen. Tapered bedeutet, dass entlang der Polymerkette ein Gradient von Oxiran-reich nach Oxiran-arm oder umgekehrt vorliegt.

Bevorzugt jedoch weisen die Copolymere Blockstruktur auf, es handelt sich also um Blockcopolymere. Bevorzugt sind die Blockcopolymere aufgebaut aus mindestens einem Block aus dem oder den Oxiranen, und mindestens einem Block aus dem oder den Comonomeren.

Die erfindungsgemäßen Blockcopolymere können z.B. lineare Zweiblock-Copolymere A-B oder Dreiblock-Copolymere B-A-B bzw. A-B-A sein. Dabei steht A für den Polyoxiran-Block und B für den Block aus Comonomer(en). Für Styrol als bevorzugtes Comomomer ist B demnach ein Polystyrolblock.

Die Blockstruktur entsteht im wesentlichen dadurch, dass man zunächst das Comonomer alleine anionisch polymerisiert, wodurch ein "lebender" Block aus dem Comonomeren entsteht. Nach Verbrauch des Comonomeren wechselt man das Monomere, indem man monomeres Oxiran zufügt und anionisch zu einem Oxiranblock polymerisiert, d.h. an den lebenden Comonomerblock wird ein Polyoxiranblock anpolymerisiert. Beispielsweise kann man zunächst Styrol alleine zu einem Polystyrolblock PS polymerisieren. Nach Verbrauch des Styrols erfolgt der Monomerwechsel, indem man Propylenoxid zufügt, das dann zum Polypropylenoxid-Block PPO polymerisiert wird. Als Ergebnis dieser sog. sequentiellen Polymerisation erhält man ein Zweiblockpolymer B-A, z.B. PS-PPO.

Man kann ebenso zunächst den Polyoxiranblock A herstellen, und danach den Block B aus dem oder den Comonomeren anpolymerisieren. Jedoch wird bevorzugt zunächst der Comonomerblock B und danach der Polyoxiranblock A polymerisiert, beispielsweise zuerst der Polystyrolblock und danach der PPO-Block.

Gegenstand der Erfindung ist demnach auch ein Verfahren, dadurch gekennzeichnet, dass es sich bei den Copolymeren um Blockcopolymere handelt, wobei durch sequentielle Polymerisation zunächst das Comonomer zu einem Polymerblock B polymerisiert wird, und danach das Oxiran zu einem Polyoxiranblock A polymerisiert wird

Aus den Zweiblockpolymeren können durch Kopplung mit einem weiteren lebenden Polymerblock Dreiblockcopolymere hergestellt werden. Dazu wird zunächst ein lebender Polymerblock separat hergestellt und danach mit einem Kopplungsmittel (siehe unten) an das Zweiblockcopolymer gekoppelt. Dreiblockcopolymere können auch mittels eines telechelen Mittelblocks hergestellt werden. So kann man an einen telechelen Polystyrolblock zwei endständige PPO-Blöcke anpolymerisieren, wodurch ein Dreiblockcopolymer PPO-PS-PPO entsteht. Bei den Dreiblockcopolymeren können die beiden Comonomerblöcke (z.B. Polystyrolblöcke) gleich groß (gleiches Molekulargewicht, also symmetrischer Aufbau) oder verschieden groß (unterschiedliches Molekulargewicht also asymmetrischer Aufbau sein. Die Blockgrößen hängen beispielsweise ab von den verwendeten Monomermengen und den Polymerisationsbedingungen.

Bei der Herstellung der Blockcopolymere können sowohl die Alkalimetallverbindung als auch das Aluminiumorganyl bereits bei der Polymerisation des ersten Blocks zugegeben werden. Jedoch kann man insbesondere dann, wenn - wie es bevorzugt ist - zunächst der Comonomer-Block und danach der Polyoxiran-Block hergestellt wird, den Comonomerblock in Gegenwart der Alkalimetallverbindung polymerisieren (d.h. ohne Aluminiumorganyl) und das Aluminiumorganyl erst bei der Polymerisation des Polyoxiranblocks zufügen.

Beispielsweise kann man zunächst aus Styrol mittels Alkalimetallverbindung (z.B. sec-Butyllithium) den Polystyrolblock herstellen, und erst bei der Zugabe des Oxiranmonomers das Aluminiumorganyl (z.B. TIBA) zufügen und zum Polyoxiranblock polymerisieren.

Besonders bevorzugt gibt man - nach der Herstellung des Comonomerblocks - erst das Oxiranmonomer, und nach dem Anspringen der Reaktion, in manchen Fällen sichtbar an einer Verfärbung der Reaktionsmischung, das Aluminiumorganyl hinzu.

Bevorzugt wird bei der Herstellung der Blockcopolymere zumindest das Oxiranmonomer bei einem molaren Überschuß von Aluminium gegenüber Alkalimetall, polymerisiert. Insbesondere beträgt zumindest bei der Polymerisation des Polyoxiranblocks A das Molverhältnis von Aluminium zu Alkalimetall 1:1 bis 100:1.

Die genannten Blockcopolymere können eine (vorstehend beschriebene) lineare Struktur aufweisen. Jedoch sind auch verzweigte oder stemförmige Strukturen möglich und für manche Anwendungen bevorzugt. Verzweigte Blockcopolymere erhält man in bekannter Weise, z.B. durch Pfropfreaktionen von polymeren "Seitenästen" auf eine Polymer-Hauptkette.

Stemförmige Blockcopolymere bzw. Dreiblockcopolymere sind z.B. durch Umsetzung der lebenden anionischen Kettenenden mit einem mindestens bifunktionellen Kopplungsmittel gebildet Solche Kopplungsmittel werden etwa in den US-PS 3 985 830, 3 280 084, 3 637 554 und 4 091 053 beschrieben. Bevorzugt sind epoxidierte Glyceride (z. B. epoxidiertes Leinsamenöl oder Sojaöl), Siliciumhalogenide wie SiCl₄, oder auch Divinylbenzol, außerdem polyfunktionelle Aldehyde, Ketone, Ester, Anhydride oder Epoxide. Speziell für die Dimerisierung eignen sich auch Dichlordialkylsilane, Dialdehyde wie Terephthalaldehyd und Ester wie Ethylformiat. Durch Kopplung gleicher oder verschiedener Polymerketten kann man symmetrische oder asymmetrische Sternstrukturen herstellen, d.h. die einzelnen Stemäste können gleich oder verschieden sein, insbesondere verschiedene Blöcke bzw. unterschiedliche Blockabfolgen enthalten.

Die erfindungsgemäßen Polymere können außerdem übliche Zusatzstoffe und Verarbeitungshilfsmittel in der für diese Stoffe üblichen Mengen enthalten, z.B. Gleit- oder Entformungsmittel, Farbmittel wie z.B. Pigmente oder Farbstoffe, Flammschutzmittel, Antioxidantien, Stabilisatoren gegen Lichteinwirkung, faser- und pulverförmige Füll- oder Verstärkungsmittel oder Antistatika, sowie andere Zusatzstoffe, oder deren Mischungen.

Die Herstellung der Formmassen kann nach an sich bekannten Mischverfahren erfolgen, beispielsweise unter Aufschmelzen in einem Extruder, Banbury-Mischer, Kneter, Walzenstuhl oder Kalander. Die Komponenten können jedoch auch "kalt" verwendet werden und das pulvrige oder aus Granulaten bestehende Gemisch wird erst bei der Verarbeitung aufgeschmolzen und homogenisiert.

Aus den erfindungsgemäßen Homo- und Copolymeren lassen sich Formkörper (auch Halbzeuge) Folien, Fasern und Schäume aller Art herstellen.

Gegenstand der Erfindungen sind demnach auch die Verwendung der erfindungsgemäßen Homo- und Copolymere zur Herstellung von Formkörpern, Folien, Fasern und Schäumen, sowie die aus den Polymeren erhältlichen Formkörper, Folien, Fasern und Schäume.

Das erfindungsgemäße Verfahren ist ein alternatives Verfahren zur Polymerisation von Oxiranen und weist gegenüber den Verfahren des Standes der Technik u.a. ökonomische Vorteile auf. Die Polymerisationszeiten sind deutlich kürzer als bei den bisher bekannten Verfahren. Zugleich sind trotz der kürzeren Polymerisationszeit die erzielten Molekulargewichte höher, siehe etwa Beispiel H10 mit einem Mn von 69900 g/mol nach nur 6 Stunden.

Das Verfahren erlaubt die Herstellung von Homo- und Copolymeren auf gleichermaßen einfache Weise. Die erhaltenen Polymere zeichnen sich durch geringe Gehalte an Restmonomeren bzw. -oligomeren aus. Außerdem lassen sich PO-Homopolymere und PO-EO-Copolymere unter ähnlichen Verfahrensbedingungen herstellen, was wegen des preiswerteren EO wirtschaftlich vorteilhaft ist.

Das gefundene Verfahren erlaubt eine bessere Kontrolle der Oxiranpolymerisation, d.h. die Polymerisation der reaktiven Oxirane lässt sich auf einfache Weise steuern.

### Beispiele:

### 1. Einsatzstoffe

Es wurden die unter 1a und 1b genannten Verbindungen verwendet, wobei "gereinigt" bedeutet, dass mit Aluminoxan gereinigt und getrocknet wurde, sofern nicht anders angegeben. Bei Handelsprodukten ist hinter # die Artikelnummer bzw. Bestellnummer angegeben. Handelsprodukte wurden ohne weitere Reinigung verwendet.

### 1 a. Monomere, Lösungsmittel und Hilfsstoffe

- Styrol, gereinigt
- Propylenoxid (PO), gereinigt durch Calciumhydrid,
- Heptan, gereinigt,
- Cyclohexan, gereinigt
- Toluol, gereinigt
- Tetrahydrofuran (THF), gereinigt
- Ethanol (als Abbruchmittel),
- N,N,N',N'-Tetramethylethylendiamin (TMEDA) von Fa. Aldrich (# 41, 101-9), redestilled grade < 99,5 %,

### 1b. Alkalimetallverbindungen und Aluminiumorganyle

Die Aluminiumorganyle und Alkalimetallverbindungen wurden als Lösungen verwendet. Einige der Lösungen wurden durch Umsetzung entsprechender Ausgangslösungen erhalten. Alle Verdünnungen bzw. Umsetzungen wurden unter Rühren, bei 25°C und unter Schutzgas vorgenommen, sofern nicht anders angegeben. Es wurden folgende Lösungen L1 bis L17 verwendet:
L1: Triisobutylaluminium (TIBA) als 1,0 molare Lösung in Toluol (fertige Lösung von Fa. Aldrich, # 19,271-6)
L2: Triethylaluminium (TEA) 1,0 molar:
   Eine 1,9 molare Triethylaluminium-Lösung in Toluol (fertige Lösung von Fa. Aldrich, # 25,718-4) wurde mit Toluol auf eine Konzentration von 1 mol/l verdünnt.
L3: Kalium-tert-amylat (tAmO-K) = Kalium-2-methyl-2-butanolat, als 0,78 molare Lösung in Cyclohexan:
   1 g zerkleinertes Kaliummetall wurde kurz mit Ethanol gewaschen, in Toluol abgespült und im Vakuum mit 23 ml Cyclohexan versetzt. Nach Zugabe von 2,1 ml 2-Methyl-butan-2-ol hielt man 3 Tage bei 80°C. Die erhaltene Lösung von Kalium-tert-amylat in Cyclohexan war 0,78 molar.
L4: Natrium-tert-amylat (tAmO-Na) = Natrium-2-methyl-2-butanolat, als 0,75 molare Lösung in Cyclohexan:
   Es wurde vorgegangen wie bei L3 beschrieben, jedoch wurde statt 1 g Kaliummetall, 1 g natruimmetall verwendet. Die erhaltene Lösung von Natrium-tert-amylat in Cyclohexan war 0,75 molar.
L5: Lösung von Dimethyl-aluminium-iso-propanolat (iPrO-Al-Me₂) und Natrium-tert-amylat, jeweils 0,52 molar:
   Eine 2,0 molare Lösung von Trimethylaluminium (TMA) in Toluol (fertige Lösung von Fa. Aldrich, # 25,723-0) wurde mit Toluol auf 0,2 mol/l verdünnt. Zu dieser 0,2 molaren TMA-Lösung wurde soviel Isopropanol (> 99,5 %, wasserfrei, Fa. Aldrich, # 27,847-5) gegeben, dass das Molverhältnis Isopropanol/Al 1:3 betrug. Man erhielt eine Lösung L5a von Dimethyl-aluminium-iso-propanolat. Anschließend wurde diese Lösung L5a mit soviel Natrium-tert-amylat-Lösung L4 vermischt und mit Toluol verdünnt, dass die Konzentrationen von Dimethyl-aluminium-iso-propanolat und von Natrium-tert-amylat jeweils 0,52 mol/l betrugen.
L6: Lösung von Dimethyl-aluminium-n-butanolat (nBuO-Al-Me₂) und Natrium-tert-amylat, jeweils 0,52 molar:
   Eine 2,0 molare Lösung von Trimethylaluminium (TMA) in Toluol (als fertige Lösung von Fa. Aldrich, # 25,723-0) wurde mit Toluol auf 0,2 mol/l verdünnt. Zu dieser 0,2 molaren TMA-Lösung wurde soviel n-Butanol (> 99,9 %, wasserfrei, Fa. Aldrich, # 28,154-9) gegeben, dass das Molverhältnis n-Butanol/Al 1:3 betrug. Man erhielt eine Lösung L6a von Dimethyl-aluminium-n-butanolat. Anschließend wurde diese Lösung L6a mit soviel Natrium-tert-amylat-Lösung L4 vermischt und mit Toluol verdünnt, dass die Konzentrationen von Dimethyl-aluminium-n-butanolat und von Natrium-tert-amylat jeweils 0,52 mol/l betrugen.
L7: Lösung von iBu₂-Al-O-nBu-O-Al-iBu₂ 0,13 molar, und Natrium-tert-amylat, 0,52 molar:
   Die 1,0 molare TIBA-Lösung L1 wurde mit Toluol auf 0,1 mol/l verdünnt. Zu dieser 0,1 molaren TIBA-Lösung wurde soviel 1,4-Butandiol (> 99 %, wasserfrei, Fa. Aldrich, # 24,055-9) gegeben, dass das Molverhältnis 1,4-Butandiol/Al 1:6 betrug. Man erhielt eine Lösung L7a von iBu₂-Al-OnBuO-Al-iBu₂. Anschließend wurde diese Lösung L7a mit soviel Natrium-tert-amylat-Lösung L4 vermischt und mit Toluol verdünnt, dass die Konzentration von iBu₂-Al-OnBuO-Al-iBu₂ 0,13 mol/l (demnach 0,26 mol/l Al) und die Konzentration von Natrium-tert-amylat 0,52 mol/l betrug.
L8: Lösung von Triisobutylaluminium (TIBA) 0,516 molar, und Kaliumhydroxid (KOH) 0,258 molar:
   Zu der 1,0 molaren TIBA-Lösung L1 wurden soviel festes Kaliumhydroxid gegeben, dass das Molverhältnis Al/K 2:1 betrug. Die erhaltene TIBA-KOH-Lösung wurde mit Toluol verdünnt, sodass die Konzentration von TIBA 0,516 mol/l und die Konzentration von Kaliumhydroxid 0,258 mol/l betrug.
L9: Lösung von Triisobutylaluminium (TIBA) 1,0 molar, und Natriumhydrid (NaH) 0,202 molar:
   Zu der 1,0 molaren TIBA-Lösung L1 wurden soviel festes Natriumhydrid gegeben, dass die Konzentration von TIBA 1,0 mol/l und die Konzentration von Natriumhydrid 0,202 mol/l betrug.
L10: Lösung von Triisobutylaluminium (TIBA) 1,0 molar, und Lithiumhydrid (LiH) 0,202 molar:
   Zu der 1,0 molaren TIBA-Lösung L1 wurden soviel festes Lithiumhydrid gegeben, dass die Konzentration von TIBA 1,0 mol/l und die Konzentration von Lithiumhydrid 0,202 mol/l betrug.
L11: Lösung von Triisobutylaluminium (TIBA) 1,0 molar, und Natriumhydrid (NaH) 0,98 molar:
   Zu der 1,0 molaren TIBA-Lösung L1 wurden soviel festes Natriumhydrid gegeben, dass die Konzentration von TIBA 1,0 mol/l und die Konzentration von Natriumhydrid 0,98 mol/l betrug.
L12: Natrium-iso-propanolat (iPrO-Na) als 1,306 molare Lösung in Tetrahydrofuran: 1 g zerkleinertes Natriummetall wurde kurz mit Ethanol gewaschen, in Toluol abgespült und im Vakuum mit 19 ml Tetrahydrofuran versetzt. Nach Zugabe von 2 ml Isopropanol hielt man 3 Tage bei 50°C. Die erhaltene Lösung von Natrium-iso-propanolat in Tetrahydrofuran war 1,306 molar.
L13: sec-Butyllithium (sBuLi) als 1,3 molare Lösung in Toluol (fertige Lösung von Fa. Aldrich, # 19,559-6)
L14: Lösung von Triisobutylaluminium (TIBA) 0,135 molar, und Natriumhydrid (NaH) 0,15 molar:
   Zu der 1,0 molaren TIBA-Lösung L1 wurden soviel festes Natriumhydrid gegeben, dass das Molverhältnis Al/Na 0,9 betrug. Die erhaltene TIBA-NaH-Lösung wurde mit Toluol verdünnt, sodass die Konzentration von TIBA 0,135 mol/l und die Konzentration von Natriumhydrid 0,15 mol/l betrug.
L15: Ethyl-di-iso-butyl-aluminium (Et-Al-iBu₂) 0,482 molar:
   Zu der TIBA-Lösung L1 wurde soviel der TEA-Lösung L2 gegeben, dass das Molverhältnis TIBA/TEA 2:1 betrug. Man erhielt eine 0,482 molare Lösung von Ethyl-di-iso-butyl-aluminium.
L16: Diethylzink (Et₂-Zn) 0,482 molar
   Eine 1,1 molare Diethylzink-Lösung in Toluol (fertige Lösung von Fa. Aldrich, # 22,080-9) wurde mit Toluol auf eine Konzentration von 0,482 mol/l verdünnt.
L17: Triethylbor (Et₃-B) 0,482 molar
   Eine 1,0 molare Triethylbor-Lösung in Hexan (fertige Lösung von Fa. Aldrich, #19,503-0) wurde mit Toluok auf eine Konzentration von 0,482 mol/l verdünnt.

### 2. Herstellung der Polymere

Alle Polymerisationen wurden unter Feuchtigkeitsausschluss in einer glove box mit Stickstoffatmoshäre durchgeführt. Es wurde ein mit Magnetrührer und Septum ausgestatteter, temperierbarer Rundkolben verwendet. Während der Polymerisation wurde gerührt und die Abnahme der Monomerkonzentration gravimetrisch verfolgt. Die Polymerisation wurde durch Zugabe von 10 ml Ethanol abgebrochen.

Die Molekulargewichte und Molekulargewichtsverteilungen der erhaltenen Polymermischung wurden durch Gelpermeationschromatographie (GPC) bestimmt mit Tetrahydrofuran als Eluent und Kalibration mit Polystyrolstandards. Aus dem zahlenmittleren Molekulargewicht Mn und dem gewichtsmittleren Molekulargewicht Mw wurde der Polydispersitätsindex PDI = Mw/Mn, bestimmt.

"GPC-Peak" bezieht sich auf das bei der GPC erhaltene Chromatogramm, und "Integral" meint das Integral über alle Peaks. Die Molekulargewichte sind in g/mol angegeben.

### 2a. Herstellung von PO-Homopolymeren H

Beispiel H1

Zu 14 ml Heptan wurden 8 ml PO gegeben. Man fügte 0,3 ml der Lösung L3 (tAmO-K) und 1,2 ml der Lösung L1 (TIBA) hinzu, sodass das Molverhältnis Al/K 5:1 betrug. Es wurde 15 Stunden bei 0°C polymerisiert und danach abgebrochen. Die Ergebnisse waren wie folgt: Umsatz 99 %, Polydispersitätsindex PDI 1,5, zahlenmittleres Molekulargewicht Mn 20800.

### Beispiel H2

Zu 5 ml Cyclohexan wurden 5 ml PO gegeben. Man fügte 0,2 ml der Lösung L4 (tAmO-Na) und 0,75 ml der Lösung L1 (TIBA) hinzu, sodass das Molverhältnis Al/Na 5:1 betrug. Es wurde 25 min bei 20°C polymerisiert und danach abgebrochen. Die Ergebnisse waren wie folgt: Umsatz 100 %, Polydispersitätsindex PDI 2,0, zahlenmittleres Molekulargewicht Mn 15100.

### Vergleichsbeispiel V1

Zu 6 ml Heptan wurden 5 ml PO gegeben. Man fügte 0,2 ml der Lösung L3 (tAmO-K), jedoch kein Aluminiumorganyl hinzu. Es wurde 19 Stunden bei 0°C polymerisiert und danach abgebrochen. Die Ergebnisse waren wie folgt: Umsatz 0,5 %, zahlenmittleres Molekulargewicht Mn kleiner 1000.

### Beispiel H3

Zu 7 ml Toluol wurden 7 ml PO gegeben. Man fügte 0,49 ml der Lösung L5 (iPrO-Al-Me₂ und tAmO-Na) und 1,01 ml der Lösung L1 (TIBA) hinzu, sodass das Molverhältnis Al/Na 5:1 betrug. Es wurde 15 Stunden bei 20°C polymerisiert und danach abgebrochen. Die Ergebnisse waren wie folgt: Umsatz 34 %, Polydispersitätsindex PDI 1,7, zahlenmittleres Molekulargewicht Mn 7600.

### Beispiel H4

Zu 7 ml Toluol wurden 7 ml PO gegeben. Man fügte 0,3 ml der Lösung L6 (nBuO-Al-Me₂ und tAmO-Na) und 0,62 ml der Lösung L1 (TIBA) hinzu, sodass das Molverhältnis Al/Na 5:1 betrug. Es wurde 100 min bei 20°C polymerisiert und danach abgebrochen. Die Ergebnisse waren wie folgt: Umsatz 43 %, Polydispersitätsindex PDI 1,9, zahlenmittleres Molekulargewicht Mn 15600.

### Beispiel H5

Zu 7 ml Toluol wurden 7 ml PO gegeben. Man fügte 0,3 ml der Lösung L7 (iBu₂-Al-O-nBu-O-Al-iBu₂ und tAmO-Na) und 0,70 ml der Lösung L1 (TIBA) hinzu, sodass das Molverhältnis Al/Na 5:1 betrug. Es wurde 180 min bei 20°C polymerisiert und danach abgebrochen. Die Ergebnisse waren wie folgt: Umsatz 98 %, Polydispersitätsindex PDI 1,6, zahlenmittleres Molekulargewicht Mn 18700.

### Beispiel H6

Zu 3 ml Cyclohexan wurden 0,5 ml der Lösung L8 (TIBA und KOH) gegeben und 0,38 ml der Lösung L1 (TIBA) zugefügt, sodass das Molverhältnis Al/K 5:1 betrug. Nach 10 min fügte man 3,4 ml PO hinzu. Es wurde 3 Stunden bei 20°C polymerisiert und danach abgebrochen. Die Ergebnisse waren wie folgt: Umsatz 99 %, Polydispersitätsindex PDI 2,2, zahlenmittleres Molekulargewicht Mn 12500.

### Beispiel H7

Zu 3 ml Toluol wurden 0,4 ml der Lösung L9 (TIBA und NaH) gegeben, sodass das Molverhältnis Al/Na 5:1 betrug. Nach 10 min fügte man 3 ml PO hinzu. Es wurde 50 min bei 20°C polymerisiert und danach abgebrochen. Die Ergebnisse waren wie folgt: Umsatz 96 %, Polydispersitätsindex PDI 1,6, zahlenmittleres Molekulargewicht Mn 18200.

### Beispiel H8

Zu 3 ml Toluol wurden 1,2 ml der Lösung L10 (TIBA und LiH) gegeben, sodass das Molverhältnis Al/Li 5:1 betrug. Nach 10 min fügte man 3 ml PO hinzu. Es wurde 15 min bei 0°C polymerisiert und danach abgebrochen. Die Ergebnisse waren wie folgt: Umsatz 96 %, Polydispersitätsindex PDI 1,5, zahlenmittleres Molekulargewicht Mn 9000.

### Beispiel H9

a) Zu 3,5 ml der Lösung L11 (TIBA und NaH) wurden 0,54 ml Styrol gegeben und die Reaktionsmischung 48 Stunden bei 70°C gehalten. Man erhielt eine Lösung von Styrylnatrium (StyNa) und TIBA.
b) Zu 5 ml Cyclohexan wurden 5 ml PO gegeben. Man fügte 0,8 ml der Lösung L1 (TI-BA) und 0,2 ml der unter a) erhaltenen Lösung (StyNa und TIBA) hinzu, sodass das Molverhältnis AI/Na 5:1 betrug. Es wurde 75 min bei 20°C polymerisiert und danach abgebrochen. Die Ergebnisse waren wie folgt: Umsatz 99 %, Polydispersitätsindex PDI 1,6, zahlenmittleres Molekulargewicht Mn 16300.

### Beispiel H10

Zu 20 ml Cyclohexan wurden 7 ml PO gegeben. Man fügte 0,04 ml der Lösung L12 (iPrO-Na) und 2 ml der Lösung L1 (TIBA) hinzu, sodass das Molverhältnis Al/Na 38:1 betrug. Es wurde 6 Stunden bei 0°C polymerisiert und danach abgebrochen. Die Ergebnisse waren wie folgt: Umsatz 99 %, Polydispersitätsindex PDI 1,25, zahlenmittleres Molekulargewicht Mn 69900.

### Beispiel H11

Zu 20 ml Cyclohexan wurde 1 ml PO gegeben. Man fügte 0,04 ml der Lösung L12 (iPrO-Na) und 0,26 ml der Lösung L1 (TIBA) hinzu, sodass das Molverhältnis Al/Na 5:1 betrug. Es wurde 60 min bei 0°C polymerisiert und danach abgebrochen. Die Ergebnisse waren wie folgt: Umsatz 93 %, Polydispersitätsindex PDI 1,13, zahlenmittleres Molekulargewicht Mn 22600.

### Beispiel H12

Zu 20 ml Cyclohexan wurde 1 ml PO gegeben. Man fügte 0,04 ml der Lösung L12 (iPrO-Na) und 0,26 ml der Lösung L2 (TEA) hinzu, sodass das Molverhältnis Al/Na 5:1 betrug. Es wurde 60 min bei 0°C polymerisiert und danach abgebrochen. Die Ergebnisse waren wie folgt: Umsatz 17 %, Polydispersitätsindex PDI 1,22, zahlenmittleres Molekulargewicht Mn 2500.

### Beispiel H13

Zu 20 ml Cyclohexan wurde 1 ml PO gegeben. Man fügte 0,04 ml der Lösung L12 (iPrO-Na) und 0,26 ml der Lösung L2 (TEA) sowie 0,03 g TMEDA hinzu, sodass das Molverhältnis Al/Na 5:1 betrug. Es wurde 2 Stunden bei 0°C polymerisiert und danach abgebrochen. Die Ergebnisse waren wie folgt: Umsatz 12 %, Polydispersitätsindex PDI 1,15, zahlenmittleres Molekulargewicht Mn 1900.

### Vergleichsbeispiel V2

Es wurde vorgegangen wie in Beispiel H1, wobei anstelle von Lösung L3 (tAmO-K) 0,3 ml der Lösung L13 (sBuLi), und kein Aluminiumorganyl, verwendet wurde. Nach 7 Tagen wurde abgebrochen. Die Ergebnisse waren wie folgt: Umsatz 0,5 %; zahlenmittleres Molekulargewicht Mn kleiner 1000.

### Vergleichsbeispiel V3

Es wurde vorgegangen wie in Beispiel H1, wobei anstelle von Lösung L3 (tAmO-K) Kaliumhydroxid, und kein Aluminiumorganyl, verwendet wurde. Nach 7 Tagen wurde abgebrochen. Die Ergebnisse waren wie folgt: Umsatz 11 %; zahlenmittleres Molekulargewicht Mn 3400.

### Vergleichsbeispiel V4

Es wurde vorgegangen wie in Beispiel H1, wobei anstelle von Lösung L3 (tAmO-K) 0,3 ml der Lösung L12 (iPrO-Na), und kein Aluminiumorganyl, verwendet wurde. Nach 7 Tagen wurde abgebrochen. Die Ergebnisse waren wie folgt: Umsatz 0,5 %; zahlenmittleres Molekulargewicht Mn kleiner 1000.

### 2b. Herstellung von PO-Blockcopolymeren C

### Beispiel C1

a) Zu 2 ml der Lösung L14 (TIBA und NaH) wurden 3 ml Styrol gegeben und 12 Stunden bei 100°C polymerisiert. Der erhaltene Polystyrolblock (Polystyryl-Natrium, PS-Na) wies einen Polydispersitätsindex PDI von 1,4 und ein zahlenmittleres Molekulargewicht Mn von 9100 auf.
b) Zu 5 ml Toluol wurden 5 ml PO gegeben. Man fügte 1,2 ml der Lösung L1 (TIBA) und 5 ml der unter a) erhaltenen Lösung (PS-Na) hinzu, sodass das Molverhältnis Al/Na 5:1 betrug. Es wurde 60 min bei 0°C und noch 10 min bei 20°C polymerisiert und danach abgebrochen. Die Ergebnisse des erhaltenen PS-PPO-Blockcopolymeren waren wie folgt: Umsatz 26 %, Polydispersitätsindex PDI 3,8, zahlenmittleres Molekulargewicht Mn 19400.

### Beispiel C2

a) Zu 14 ml Cyclohexan wurden 3,5 ml Styrol gegeben. Man fügte 1,25 ml der Lösung L13 (sBuLi) hinzu und polymerisierte 2 Stunden bei 0°C. Der erhaltene Polystyrolblock (Polystyryl-Lithium, PS-Li) wies einen Polydispersitätsindex PDI von 1,1 und ein zahlenmittleres Molekulargewicht Mn von 1700 auf.
b) Zu 6 ml PO wurden 1,75 ml der Lösung L1 (TIBA) und 4 ml der unter a) erhaltenen Lösung (PS-Li) gegeben, sodass das Molverhältnis Al/Li 5:1 betrug. Es wurde 60 min bei 0°C und noch 15 Stunden bei 20°C polymerisiert und danach abgebrochen. Die Ergebnisse des erhaltenen PS-PPO-Blockcopolymeren waren wie folgt: Umsatz 98 %, Polydispersitätsindex PDI 1,7, zahlenmittleres Molekulargewicht Mn 7700. Ein zweiter GPC-Peak mit weniger als 5 % des Integrals wurde dem PS-Li zugeordnet.

### Beispiel C3

a) Zu 6,8 ml Cyclohexan wurden 10,7 ml Styrol gegeben. Man fügte 1,3 ml der Lösung L13 (sBuLi) hinzu und polymerisierte und 2 Stunden bei 0°C. Der erhaltene Polystyrolblock (Polystyryl-Lithium, PS-Li) wies einen Polydispersitätsindex PDI von 1,1 und ein zahlenmittleres Molekulargewicht Mn von 4700 auf.
b) Zu 3,8 ml der unter a) erhaltenen Lösung (PS-Li) wurden 6 ml PO gegeben. Nach Verfärbung der Lösung gab man 1,75 ml der Lösung L1 (TIBA) hinzu, sodass das Molverhältnis Al/Li 5:1 betrug. Es wurde 60 min bei 0°C und noch 13 Stunden bei 20°C polymerisiert und danach abgebrochen. Die Ergebnisse des erhaltenen PS-PPO-Blockcopolymeren waren wie folgt: Umsatz 99 %, Polydispersitätsindex PDI 1,5, zahlenmittleres Molekulargewicht Mn 8000. Ein zweiter GPC-Peak mit ca. 40 % des Integrals wurde dem PS-Li zugeordnet.

### Beispiel C4

a) Zu 10 ml Cyclohexan wurden 3 ml Styrol gegeben. Man fügte 0,2 ml der Lösung L13 (sBuLi) hinzu und polymerisierte und 2 Stunden bei 0°C. Der erhaltene Polystyrolblock (Polystyryl-Lithium, PS-Li) wies einen Polydispersitätsindex PDI von 1,16 und ein zahlenmittleres Molekulargewicht Mn von 10600 auf.
b) Zu 7,2 ml der unter a) erhaltenen Lösung (PS-Li) wurden 4 ml PO und 4 ml Cyclohexan gegeben. Nach Verfärbung der Lösung gab man 0,71 ml der Lösung L1 (TIBA) hinzu, sodass das Molverhältnis Al/Li 5:1 betrug. Es wurde 60 min bei 0°C und noch 47 Stunden bei 20°C polymerisiert und danach abgebrochen. Die Ergebnisse des erhaltenen PS-PPO-Blockcopolymeren waren wie folgt: Umsatz 94 %, Polydispersitätsindex PDI 1,4, zahlenmittleres Molekulargewicht Mn 30800. Ein zweiter GPC-Peak mit ca. 30 % des Integrals wurde dem PS-Li zugeordnet.

### Beispiel C5

a) Zu 12,5 ml Cyclohexan wurden 0,56 ml Styrol gegeben. Man fügte 0,2 ml der Lösung L13 (sBuLi) hinzu und polymerisierte und 2 Stunden bei 0°C. Der erhaltene Polystyrolblock (Polystyryl-Lithium, PS-Li) wies einen Polydispersitätsindex PDI von 1,16 und ein zahlenmittleres Molekulargewicht Mn von 1950 auf.
b) Zu 10,8 ml der unter a) erhaltenen Lösung (PS-Li) wurden 4 ml PO und 4 ml Cyclohexan gegeben. Nach Verfärbung der Lösung gab man 2,66 ml der Lösung L15 (Et-Al-iBu₂) hinzu, sodass das Molverhältnis Al/Li 9:1 betrug. Es wurde 60 min bei 0°C und noch 2 Stunden bei 20°C polymerisiert und danach abgebrochen. Die Ergebnisse des erhaltenen PS-PPO-Blockcopolymeren waren wie folgt: Umsatz 99 %, Polydisper sitätsindex PDI 1,9, zahlenmittleres Molekulargewicht Mn 3700. Ein zweiter GPC-Peak mit ca. 30 % des Integrals wurde dem PS-Li zugeordnet.

### Beispiel C6

a) Zu 5,2 ml Toluol wurden 2,5 ml Styrol gegeben. Man fügte 0,9 ml der Lösung L13 (sBuLi) hinzu und polymerisierte und 2 Stunden bei 0°C. Der erhaltene Polystyrolblock (Polystyryl-Lithium, PS-Li) wies einen Polydispersitätsindex PDI von 1,1 und ein zahlenmittleres Molekulargewicht Mn von 2200 auf.
b) Zu 1 ml der unter a) erhaltenen Lösung (PS-Li) wurden 2,5 ml PO gegeben. Nach Verfärbung der Lösung gab man 0,29 ml der Lösung L15 (Et-Al-iBu₂) und 0,53 ml der Lösung L2 (TEA) hinzu, sodass das Molverhältnis Al/Li 5:1 betrug. Es wurde 60 min bei 0°C und noch 14 Stunden bei 20°C polymerisiert und danach abgebrochen. Die Ergebnisse des erhaltenen PS-PPO-Blockcopolymeren waren wie folgt: Umsatz 60 %, Polydispersitätsindex PDI 1,4, zahlenmittleres Molekulargewicht Mn 3100. Ein zweiter GPC-Peak mit ca. 50 % des Integrals wurde dem PS-Li zugeordnet.

### Beispiel C7

a) Zu 5,2 ml Toluol wurden 2,5 ml Styrol gegeben. Man fügte 0,9 ml der Lösung L13 (sBuLi) hinzu und polymerisierte und 2 Stunden bei 0°C. Der erhaltene Polystyrolblock (Polystyryl-Lithium, PS-Li) wies einen Polydispersitätsindex PDI von 1,1 und ein zahlenmittleres Molekulargewicht Mn von 2200 auf.
b) Zu 1 ml der unter a) erhaltenen Lösung (PS-Li) wurden 2,5 ml PO gegeben. Nach Verfärbung der Lösung gab man 4,77 ml der Lösung L15 (Et-Al-iBu₂) hinzu, sodass das Molverhältnis Al/Li 5:1 betrug. Es wurde 60 min bei 0°C polymerisiert und danach abgebrochen. Die Ergebnisse des erhaltenen PS-PPO-Blockcopolymeren waren wie folgt: Umsatz 99 %, Polydispersitätsindex PDI 2,0, zahlenmittleres Molekulargewicht Mn 4200. Ein zweiter GPC-Peak mit ca. 30 % des Integrals wurde dem PS-Li zugeordnet.

### Vergleichsbeispiel V5

Es wurde vorgegangen wie in Beispiel C7, wobei anstelle von Lösung L15 (Et-Al-iBu₂) 4,77 ml der Lösung L16 (Et₂-Zn) verwendet wurde. Nach 48 Stunden wurde abgebrochen. Die Ergebnisse waren wie folgt: Umsatz 0,5 %; GPC-Analyse ergab, dass in Stufe b) am PS-Block kein PPO-Block gebildet wurde.

### Vergleichsbeispiel V6

Es wurde vorgegangen wie in Beispiel C7, wobei anstelle von Lösung L15 (Et-Al-iBu₂) 4,77 ml der Lösung L17 (Et₃-B) verwendet wurde. Nach 48 Stunden wurde abgebrochen. Die Ergebnisse waren wie folgt: Umsatz 0,5 %; GPC-Analyse ergab, dass in Stufe b) am PS-Block kein PPO-Block gebildet wurde.

Die Beispiele zeigen, dass sich mit dem erfindungsgemäßen Verfahren sowohl Homoals auch Copolymere von Oxiranen auf einfache Weise herstellen lassen. Die Polymerisationszeiten sind erheblich kürzer bzw. die erzielten Molekulargewichte Mn sind deutlich höher als bei den bekannten Verfahren: Beispiel H1, 20800 nach 15 Stunden; Beispiel H2, 15100 nach nur 25 min; Beispiel H7, 18200 nach 50 min; Beispiel H10, 69900 nach 6 Stunden; und Beispiel H11 22600 nach 60 min. Dies gilt auch für die Copolymere: Beispiel C1, 19400 nach 12 Stunden für den PS-Block und 70 min für den PPO-Block; Beispiel C4, 30800 nach 2 Stunden (PS) plus 48 Stunden (PPO); Beispiel C7 4200 nach 2 Stunden (PS) plus 1 Stunde (PPO).

Die Vergleichsbeispiele V1 bis V6 zeigen, dass bei Weglassen des Aluminiumorganyls keine Oxiranpolymere gebildet werden, bzw. bei V3 das erhaltene Molekulargewicht mit nur 3400 nach immerhin 7 Tagen Polymerisationsdauer sehr gering ist.

## Patentansprüche

1. Verfahren zur Herstellung von Homopolymeren aus Propylenoxid, oder von Copolymeren aus Oxiranen und Comonomeren, durch anionische Polymerisation in Gegenwart einer Alkalimetallverbindung, ausgewählt aus Alkoholaten, Hydriden, Hydroxiden, Amiden, Arylen, Arylalkylen und Alkylen der Alkalimetalle,
und
eines Aluminiumorganyls, **dadurch gekennzeichnet, dass** bei der Polymerisation keine Kronenether und keine Kryptanden, mitverwendet werden.

2. Verfahren nach Anspruch 1, **dadurch gekennzeichnet, dass** die Oxirane ausgewählt sind aus Propylenoxid, Ethylenoxid oder deren Mischungen.

3. Verfahren nach den Ansprüchen 1 bis 2, **dadurch gekennzeichnet, dass** die Comonomere ausgewählt sind aus Styrol, α-Methylstyrol, Butadien, Isopren oder deren Mischungen.

4. Verfahren nach den Ansprüchen 1 bis 3, **dadurch gekennzeichnet, dass** als Aluminiumorganyl, Aluminiumtrialkyle verwendet werden.

5. Verfahren nach den Ansprüchen 1 bis 4, **dadurch gekennzeichnet, dass** das Molverhältnis von Aluminium zu Alkalimetall 1:1 bis 100:1 beträgt.

6. Verfahren nach den Ansprüchen 1 bis 5, **dadurch gekennzeichnet, dass** 0,5 bis 20 mol-% Aluminiumorganyl, gerechnet als Aluminiumatome und bezogen auf die Stoffmenge des Oxirans, verwendet werden.

7. Verfahren nach den Ansprüchen 1 bis 6, **dadurch gekennzeichnet, dass** es sich bei den Copolymeren um Blockcopolymere handelt, wobei durch sequentielle Polymerisation zunächst das Comonomer zu einem Polymerblock B polymerisiert wird, und danach das Oxiran zu einem Polyoxiranblock A polymerisiert wird.

8. Verfahren nach den Ansprüchen 1 bis 7, **dadurch gekennzeichnet, dass** zumindest bei der Polymerisation des Polyoxiranblocks A das Molverhältnis von Aluminium zu Alkalimetall 1:1 bis 100:1 beträgt.

## Claims

1. A process for preparing homopolymers of propylene oxide, or for preparing copolymers of oxiranes and comonomers, via anionic polymerization in the presence of an alkali metal compound, selected from alcoholates, hydrides, hydroxides, amides, aryl compounds, arylalkyl compounds and alkyl compounds of the alkali metals,
and
of an organylaluminum compound, which comprises avoiding any use of crown ethers or of cryptands during the polymerization.

2. The process according to claim 1, wherein the oxiranes have been selected from propylene oxide, ethylene oxide, and mixtures of these.

3. The process according to claim 1 or 2, wherein the comonomers have been selected from styrene, α-methylstyrene, butadiene, isoprene, and mixtures of these.

4. The process according to any of claims 1 to 3, wherein trialkylaluminum compounds are used as organylaluminum compound.

5. The process according to any of claims 1 to 4, wherein the molar ratio of aluminum to alkali metal is from 1:1 to 100:1.

6. The process according to any of claims 1 to 5, wherein use is made of from 0.5 to 20 mol% of organylaluminum compound, calculated as aluminum atoms and based on the molar amount of the oxirane.

7. The process according to any of claims 1 to 6, wherein the copolymers are block copolymers, sequential polymerization being used, first polymerizing the comonomer to give a polymer block B and then polymerizing the oxirane to give a polyoxirane block A.

8. The process according to any of claims 1 to 7, wherein, at least during the polymerization of the polyoxirane block A, the molar ratio of aluminum to alkali metal is from 1:1 to 100:1.

## Revendications

1. Procédé de préparation d'homopolymères d'oxyde de propylène ou de copolymères d'oxirannes et de comonomères, par polymérisation anionique en présence d'un composé de métal alcalin choisi parmi des alcoolates, des hydrures, des hydroxydes, des amides, des aryles, des arylalkyles et des alkyles des métaux alcalins,
et
d'un aluminium-organyle, **caractérisé en ce que**, lors de la polymérisation, on n'utilise pas conjointement d'éther couronne et de kryptand.

2. Procédé suivant la revendication 1, **caractérisé en ce que** les oxirannes sont choisis parmi de l'oxyde de propylène, de l'oxyde d'éthylène ou de leurs mélanges.

3. Procédé suivant les revendications 1 et 2, **caractérisé en ce que** les comonomères sont choisis parmi du styrène, de l'a-méthylstyrène, du butadiène, de l'isoprène ou de leurs mélanges.

4. Procédé suivant les revendications 1 à 3, **caractérisé en ce que**, comme aluminium-organyle, on utilise des aluminium-trialkyles.

5. Procédé suivant les revendications 1 à 4, **caractérisé en ce que** le rapport molaire entre l'aluminium et le métal alcalin est de 1/1 à 100/1.

6. Procédé suivant les revendications 1 à 5, **caractérisé en ce qu'**on utilise 0,5 à 20 % molaires d'aluminium-organyle, calculé sous la forme d'atomes d'aluminium et par rapport à la quantité de l'oxiranne.

7. Procédé suivant les revendications 1 à 6, **caractérisé en ce que**, pour ce qui concerne les copolymères, il s'agit de copolymères blocs, le comonomère étant tout d'abord polymérisé en un bloc de polymère B par polymérisation séquentielle et ensuite l'oxiranne étant polymérisé en un bloc de polyoxiranne A.

8. Procédé suivant les revendications 1 à 7, **caractérisé en ce que**, au moins lors de la polymérisation du bloc de polyoxiranne A, le rapport molaire entre l'aluminium et le métal alcalin est de 1/1 à 100/1.
